# DEMANDE DE BREVET EUROPEEN

(11) **EP 1 508 708 A1**
(43) Date de publication de la demande: **23.02.2005**
(21) Numéro de dépôt: 03292074.6
(22) Date de dépôt: 22.08.2003
(51) Int. Cl.: F16C 33/20, F16C 33/28

(54) **Revêtement de glissement en matériau multicouche pour poussoir de crémaillère**

(71) Demandeur: Delphi Technologies, Inc., Troy, MI 48007 (US)
(72) Inventeur: Degorce, Frédéric, 91220 Bretigny s/Orge (FR); Irigoyen, Laura, El Paso, Texas 79912 (US)
(74) Mandataire: Laget, Jean-Loup

(57) **Abrégé**

Revêtement de glissement (9) en matériau multicouche pour poussoir de crémaillère (10), dimensionné et conformé pour venir en contact avec une crémaillère (3) de direction sur une face (22) de ladite crémaillère opposée à un pignon de commande (4), ledit matériau multicouche comprenant une couche de substrat destinée à être liée à un corps de poussoir (8), une couche intermédiaire liée à la couche de substrat et une couche supérieure de glissement en composition polymère à bas coefficient de frottement, caractérisé par le fait que ladite couche intermédiaire forme des structures surélevées qui sont distribuées sur ladite couche de substrat, font saillie sensiblement perpendiculairement à ladite couche de substrat et sont noyées dans ladite couche supérieure de glissement. En particulier, l'utilisation d'un matériau du type NORGLIDE® PRO au lieu du DU® pour la réalisation du revêtement de glissement assure une réduction significative de l'usure sans modification significative du frottement.

## Description

La présente invention se rapporte à un revêtement de glissement en matériau multicouche pour poussoir de crémaillère, à un poussoir de crémaillère destiné à être logé dans un carter de boîtier de direction à crémaillère pour maintenir une crémaillère en prise avec un pignon de commande et à un boîtier de direction à crémaillère comprenant un tel poussoir. L'invention s'applique aux boîtiers de direction à crémaillère de tout type, mécanique, électrique ou hydraulique, pour véhicule automobile.

Dans un boîtier de direction à crémaillère, le poussoir de crémaillère sert à compenser les défauts et l'usure de la crémaillère et du pignon de manière à assurer un niveau de frottement sensiblement constant au cours de l'utilisation et à empêcher les chocs entre les dentures du pignon et de la crémaillère, qui produiraient un bruit de fonctionnement indésirable et seraient préjudiciable à la qualité de fonctionnement du système de direction.

On connaît un poussoir de crémaillère comportant un corps sur lequel est fixé un revêtement de glissement en matériau multicouche conformé pour venir en contact avec une face de ladite crémaillère opposée audit pignon. Selon l'art antérieur, le matériau multicouche utilisé est du type connu sous la marque DU® ou DU-B® fabriqué par Glacier Garlock Bearings®, incluant un support en métal et une matrice poreuse frittée en bronze imprégnée et revêtue d'un mélange PTFE/plomb de frottement. Ce revêtement de glissement présente l'inconvénient de s'user assez vite, entraînant l'apparition des bruits de fonctionnement rendant nécessaires des opérations de maintenance du boîtier de direction. De plus, il contient du plomb, ce qui est contraire à certaines réglementations pour des raisons de toxicité et de pollution.

Un tel revêtement de glissement est divulgué par exemple dans US-B-6178843. Ce revêtement présente en outre une géométrie assez complexe au niveau de la surface tournée vers la crémaillère.

L'invention a pour but de proposer un poussoir de crémaillère ayant une durée de vie accrue et des caractéristiques frictionnelles satisfaisantes, et aussi simple que possible à fabriquer.

Pour cela, l'invention fournit un revêtement de glissement en matériau multicouche pour poussoir de crémaillère, dimensionné et conformé pour venir en contact avec une crémaillère de direction sur une face de ladite crémaillère opposée à un pignon de commande, ledit matériau multicouche comprenant une couche de substrat destinée à être liée à un corps de poussoir, une couche intermédiaire liée à la couche de substrat et une couche supérieure de glissement en composition polymère à bas coefficient de frottement, caractérisé par le fait que ladite couche intermédiaire forme des structures surélevées qui sont distribuées sur ladite couche de substrat, font saillie sensiblement perpendiculairement à ladite couche de substrat et sont noyées dans ladite couche supérieure de glissement.

De tels matériaux multicouches et leur procédé de fabrication sont décrits dans le brevet US-B-6258413, qui est incorporé par référence à la présente demande de brevet.

On a montré que le revêtement de glissement ainsi réalisé présentait une usure moins rapide que le revêtement de glissement de l'art antérieur en DU®, sans modification significative du coefficient de frottement.

La couche supérieure de glissement doit présenter un coefficient de frottement bas, par exemple similaire à celui du PTFE. Nombre de polymères peuvent intervenir dans la composition de la couche supérieure de glissement, ainsi qu'il est décrit dans le brevet US-B-6258413. De préférence, ladite couche supérieure de glissement est réalisée à base de fluoropolymère. La couche supérieure de glissement peut aussi comporter des matières de charge et/ou des adhésifs.

De préférence, ladite couche intermédiaire est en alliage de cuivre, de préférence en bronze. Comme décrit dans US-B-6258413, les structures surélevées peuvent être gravée au moyen d'un rouleau de calandre dans la couche intermédiaire ainsi que, éventuellement, sur la surface de la couche de substrat.

Comme décrit dans US-B-6258413, les structures surélevées peuvent avoir de nombreuses formes géométriques, notamment la forme de nervures formant des alvéoles contiguës ou non, par exemple des alvéoles polygonales, carrées, circulaires ou triangulaires. Les structures surélevées peuvent aussi avoir la forme de piliers discrets. Avantageusement, lesdites structures surélevées ont la forme de nervures délimitant des alvéoles en nid d'abeille.

Comme décrit dans US-B-6258413, différents matériaux offrant une structure suffisamment résistante peuvent servir de couche de substrat. Avantageusement, ladite couche de substrat est en acier.

Selon une réalisation particulière de l'invention, ledit revêtement de glissement est réalisé en matériau multicouche de la famille connue sous la marque NORGLIDE® PRO fabriquée par SAINT-GOBAIN PERFORMANCE PLASTICS. La famille NORGLIDE® PRO englobe différentes sous-familles, telles que BZ, XL, etc.

Avantageusement, ledit matériau multicouche ne contient pas de plomb. Ainsi, les problèmes de toxicité et de pollution inhérents à l'utilisation et au retraitement du plomb sont évités.

De préférence, ledit revêtement de glissement présente une forme de plaquette courbée en arc de cercle et présentant un rayon de courbure uniforme sur sa surface de contact. Ainsi, la fabrication du revêtement de glissement est réalisée facilement et de manière précisément reproductible, par exemple par emboutissage à la presse. Mais d'autre formes géométriques, notamment plus complexes, par exemple avec des rayons de courbure différant d'une zone à l'autre ou des arcs brisés, peuvent aussi être utilisées.

L'invention fournit également un poussoir de crémaillère destiné à être logé dans un carter de boîtier de direction à crémaillère pour maintenir une crémaillère en prise avec un pignon de commande, caractérisé par le fait que ledit poussoir comporte un corps sur lequel est fixé le revêtement de glissement précité.

L'invention fournit également un boîtier de direction à crémaillère pour véhicule automobile, comprenant une crémaillère en prise avec un pignon de commande dans un carter et un poussoir de crémaillère logé dans ledit carter de manière à exercer une poussée sur une face de ladite crémaillère opposée audit pignon, caractérisé par le fait que ledit poussoir de crémaillère est du type ci-dessus.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :
- la figure 1 est une vue partielle en coupe d'un boîtier de direction à crémaillère selon un mode de réalisation de l'invention,
- la figure 2 est une vue en perspective du corps de poussoir de crémaillère dans le boîtier de direction de la figure 1,
- la figure 3 est une vue en perspective du revêtement de glissement du poussoir de crémaillère dans le boîtier de direction de la figure 1,
- la figure 4 est une vue en coupe agrandie montrant la structure du matériau du revêtement de glissement de la figure 3.

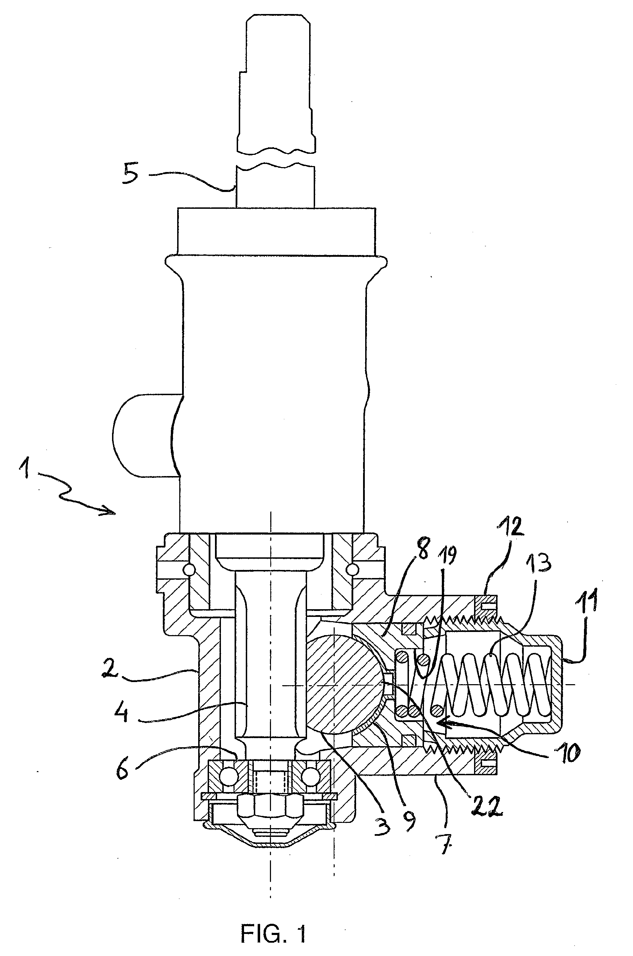

La figure 1 représente en coupe partielle une partie inférieure 1 d'un boîtier de direction à crémaillère, qui comporte un carter 2 définissant un logement globalement tubulaire (non représenté) pour une crémaillère 3, qui s'étend perpendiculairement au plan de la figure 1. La figure 1 montre un section centrale de la crémaillère 3, dont les deux extrémités (non représentées) sont destinées à être couplées respectivement aux biellettes de directions des deux roues directrices d'un véhicule, selon la technique connue. Le carter 2 contient également un pignon de commande 4 qui engrène avec la crémaillère 3 et qui est couplé en rotation à un arbre intermédiaire 5, dont l'autre extrémité est destiné à être relié à un volant de direction (non représenté). L'extrémité du pignon 4 opposée à l'arbre 5 est liée à un palier rotatif 6 fixé au carter 2. Ainsi, la rotation de l'arbre 5 permet de translater la crémaillère 3 dans un sens ou dans l'autre perpendiculairement au plan de la figure 1 par engrènement avec le pignon 4, de manière à orienter les roues directrices du véhicule. Il est à noter que des moyens hydrauliques ou électriques connus, non représentés, peuvent être prévus pour assister le déplacement de la crémaillère 3.

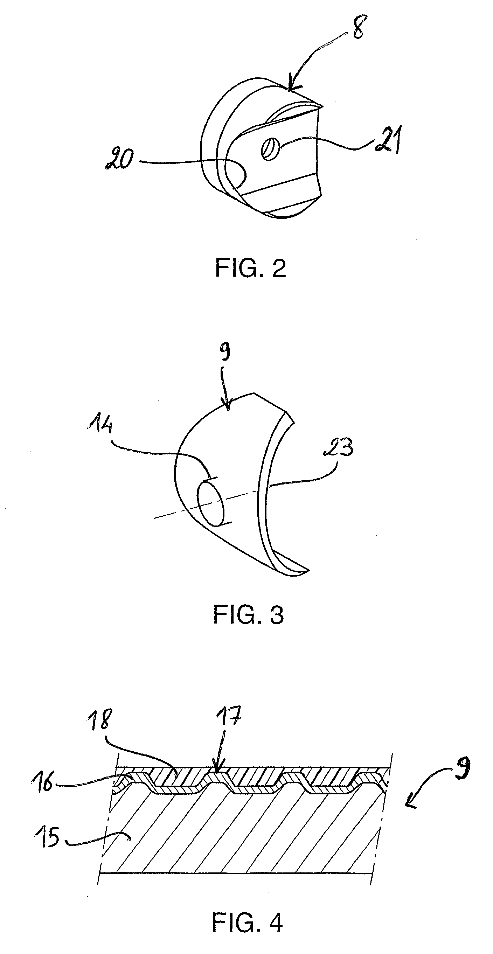

Au niveau du pignon 4, et à l'opposé de celui-ci par rapport à la crémaillère 3, le carter 2 présente un carter tubulaire 7 définissant un logement pour un poussoir de crémaillère 10, qui présente un corps 8 en acier fritté, mieux visible sur la figure 2, et un revêtement de glissement 9 rapporté sur le corps 8 et représenté plus en détail sur les figures 3 et 4. Le carter 7 est fermé à son extrémité par un couvercle 11 qui est vissé dans le carter 7 et bloqué en position par un écrou de sûreté 12 ou tout autre moyen de fixation (sertissage, collage, etc.). Un ressort hélicoïdal 13 prend appui sur le couvercle 11 et sur le fond du corps 8 de manière à pousser le poussoir 10 contre la face arrière 22 de la crémaillère opposée au pignon 4. Le poussoir de crémaillère 10 et le ressort 13 constituent un mécanisme d'ajustement pour assurer une prise constante et optimale entre la crémaillère 3 et le pignon 4, de manière à compenser leur usure et absorber les vibrations pour éviter les bruits de fonctionnement. La tension du ressort 13, ainsi que le jeu entre le couvercle 11 et le poussoir 10, peuvent être réglés en vissant plus ou moins le couvercle 11 dans le carter 7.

En référence à la figure 2, le corps 8 du poussoir de crémaillère présente un forme extérieure globalement cylindrique à section circulaire avec, sur la face inférieure, un logement 19 visible sur la figure 1 pour recevoir une extrémité du ressort 13 et, sur la face supérieure, un évidement cylindrique 20 à section en arc de cercle dont la direction génératrice est perpendiculaire à la direction génératrice du corps 8. Dans le fond de l'évidement 20 se trouve un trou de fixation 21 qui débouche dans le logement inférieur 19.

En référence à la figure 3, le revêtement de glissement 9 du poussoir de crémaillère 10 présente un forme de plaquette courbée en arc de cercle et munie d'un téton cylindrique fermé 14 saillant au centre de sa face convexe. Après avoir été mis en forme pour s'adapter précisément à l'évidemment 20, le revêtement 9 est fixé sur le corps 8 par insertion et expansion du téton 14 dans le trou de fixation 21 au moyen d'un poinçon. Le trou de fixation 21 assure aussi le centrage du revêtement 9 sur le corps 8. Des profils autres qu'un arc de cercle peuvent aussi être conférés au revêtement 9 et à l'évidement 20 qui le reçoit, par exemple avec plusieurs rayons de courbure locaux.

Le revêtement de glissement 9 est fabriqué par découpe et emboutissage d'un matériau laminé multicouche du type connu sous la marque NORGLIDE® PRO, fabriqué par SAINT-GOBAIN PERFORMANCE PLASTICS, dont la structure est représentée schématiquement sur la figure 4. Ce matériau comporte une couche de substrat 15, recouverte d'une couche intermédiaire 16, recouverte d'une couche de glissement 18 à base de résine polymère. La surface supérieure de la couche de substrat 15 et la couche intermédiaire 16 forment des structures saillantes 17, par exemple des nervures s'étendant selon un motif polygonal, qui sont noyées dans la couche de glissement 18 et recouvertes par celle-ci. Dans ce type de matériau, les structures métalliques portent la charge et la couche de glissement présente un bas coefficient de friction.

### Exemple

Un revêtement de glissement 9 est fabriqué à partir d'un matériau laminé multicouche du type connu sous la marque NORGLIDE® PRO, fabriqué par SAINT-GOBAIN PERFORMANCE PLASTICS.

La couche de substrat 15 est en acier Per DIN 1624-RRSt3-1.0347 (C 0,10%; Mn 0,2/0,4; RB 63) similaire au type 1008. La couche intermédiaire 16 est en bronze CuSn6 Per DIN 17662-CuSn6#2.1020 (Sn 6%). L'épaisseur combiné des couches 15 et 16 est 0,93 mm. La couche de glissement 18 est en polytétrafluoroéthylène (PTFE) avec une portion de polyester aromatique (25% max.) et présente une épaisseur de 0,07 mm. L'épaisseur nominale du matériau est 1,00 mm, avec une tolérance de 0,96 à 1,00 mm. Les structures saillantes sont des nervures s'étendant selon un motif en nids d'abeille (réseau hexagonal), dont les dimensions sont sensiblement celles décrites sur la figure 3 dans US-B-6258413.

Le matériau avant découpe et emboutissage se présente sous la forme d'une feuille. La plage de température de fonctionnement du matériau est de ―200°C à +260°C. La charge maximale admissible du matériau est de 200 MPa. Contrairement au DU®, ce matériau est exempt de plomb.

### Exemple comparatif

Le poussoir 10 muni du revêtement de glissement 9 selon l'exemple ci-dessus a été utilisé dans différents essais du boîtier de direction. Dans un essai de couple de rotation à vide, on mesure le couple nécessaire à faire tourner l'arbre 5 et le pignon 4 lorsque la crémaillère 3 ne supporte aucune charge extérieure (pas de biellettes de direction, pas de soufflets). Cet essai mesure les caractéristiques de frottement du revêtement de glissement. Toutes choses égales par ailleurs, le résultat est de 0,79N.m avec le revêtement 9 en NORGLIDE® PRO contre 0,73N.m avec un revêtement en DU® dont l'épaisseur est similaire (épaisseur du DU® comprise entre 0,965 et 1,005 mm). L'accroissement de couple observé est non significatif. Les caractéristiques de frottement des deux revêtements peuvent être considérées sensiblement équivalentes dans ce cas.

Dans un essai d'endurance, un machine simule l'utilisation du boîtier de direction en actionnant l'arbre 5 de manière à faire effectuer 80000 cycles de va-et-vient de la crémaillère 3 de butée à butée. L'usure du revêtement de glissement est ensuite mesurée. Le résultat est de 52µ avec le revêtement 9 en NORGLIDE® PRO contre 79µ avec un revêtement de l'art antérieur en DU®. La réduction de l'usure est spectaculaire, de sorte que la durée de vie du revêtement en NORGLIDE® PRO est nettement plus longue et que l'apparition d'un bruit de fonctionnement est éliminée ou du moins retardée.

En conclusion, l'utilisation d'un matériau du type NORGLIDE® PRO au lieu du DU® pour la réalisation du revêtement de glissement d'un poussoir de crémaillère assure une réduction significative de l'usure du revêtement sans modification significative du coefficient de frottement. D'autre matériaux pourraient s'user moins, mais en présentant un niveau de frottement désavantageux et/ou un coût plus élevé. De plus, ce choix de matériau permet l'obtention d'un revêtement de glissement exempt de plomb.

Dans le mode de réalisation représenté, la face arrière 22 de la crémaillère 3 présente un section circulaire uniforme, par exemple avec un rayon de courbure de 11 mm aux tolérances près. L'évidement 20 et le revêtement 9 sont également courbés uniformément et dimensionnés de manière à ce que la surface de contact 23 du revêtement 9 présente également un rayon de courbure de 11 mm aux tolérances près. Du fait des tolérances de fabrication, la zone de contact entre le revêtement de glissement 9 et la crémaillère 3 est selon les tolérances, soit surfacique, soit plutôt linéique ou en forme de bandes. Quoi qu'il en soi, le choix d'une courbure circulaire uniforme pour le revêtement de glissement 9 facilite sa fabrication et s'est avéré satisfaisant pour le revêtement NORGLIDE® PRO.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Revêtement de glissement (9) en matériau multicouche pour poussoir de crémaillère (10), dimensionné et conformé pour venir en contact avec une crémaillère (3) de direction sur une face (22) de ladite crémaillère opposée à un pignon de commande (4), ledit matériau multicouche comprenant une couche de substrat (15) destinée à être liée à un corps de poussoir (8), une couche intermédiaire (16) liée à la couche de substrat et une couche supérieure de glissement (18) en composition polymère à bas coefficient de frottement, **caractérisé par le fait que** ladite couche intermédiaire forme des structures surélevées (17) qui sont distribuées sur ladite couche de substrat, font saillie sensiblement perpendiculairement à ladite couche de substrat et sont noyées dans ladite couche supérieure de glissement.

2. Revêtement de glissement selon la revendication 1, **caractérisé par le fait que** ladite couche supérieure de glissement (18) est réalisée à base de fluoropolymère.

3. Revêtement de glissement selon la revendication 1 ou 2, **caractérisé par le fait que** ladite couche intermédiaire (16) est en alliage de cuivre, de préférence en bronze.

4. Revêtement de glissement selon l'une des revendications 1 à 3, **caractérisé par le fait que** lesdites structures surélevées (17) ont la forme de nervures délimitant des alvéoles en nid d'abeille.

5. Revêtement de glissement selon l'une des revendications 1 à 4, **caractérisé par le fait que** ladite couche de substrat (15) est en acier.

6. Revêtement de glissement selon l'une des revendications 1 à 5, **caractérisé par le fait qu'**il est réalisé en matériau multicouche de la famille connue sous la marque NORGLIDE® PRO fabriquée par SAINT-GOBAIN PERFORMANCE PLASTICS.

7. Revêtement de glissement selon l'une des revendications 1 à 6, **caractérisé par le fait qu'**il ne contient pas de plomb.

8. Revêtement de glissement selon l'une des revendications 1 à 7, **caractérisé par le fait qu'**il présente une forme de plaquette courbée en arc de cercle et présentant un rayon de courbure uniforme sur sa surface de contact (23).

9. Poussoir de crémaillère (10) destiné à être logé dans un carter (2) de boîtier de direction à crémaillère pour maintenir une crémaillère (3) en prise avec un pignon de commande (4), **caractérisé par le fait que** ledit poussoir comporte un corps (8) sur lequel est fixé un revêtement de glissement (9) selon l'une des revendications précédentes.

10. Boîtier de direction à crémaillère pour véhicule automobile, comprenant une crémaillère (3) en prise avec un pignon de commande (4) dans un carter (2) et un poussoir de crémaillère (10) logé dans ledit carter de manière à exercer une poussée sur une face (22) de ladite crémaillère opposée audit pignon, **caractérisé par le fait que** ledit poussoir de crémaillère est selon la revendication 9.
